# EUROPEAN PATENT SPECIFICATION

(11) **EP 1 459 508 B1**
(45) Date of publication and mention of the grant of the patent: **15.02.2006**
(21) Application number: 02788392.5
(22) Date of filing: 19.12.2002
(51) Int. Cl.: H04M 3/54, H04M 3/42

(54) **DYNAMIC PRESENCE MANAGEMENT**
DYNAMISCHE PRÄSENZVERARBEITUNG
GESTION DE PRESENCE DYNAMIQUE

(30) Priority: 27.12.2001 US 34431
(43) Date of publication of application: 22.09.2004
(73) Proprietor: Nortel Networks Limited, St.Laurent, Quebec H4S 2A9 (CA)
(72) Inventor: MCKINNON, Steve, J., Cary, NC 27511 (US); CHEN, Ta-Ming, Cary, NC 27513 (US)
(74) Representative: Ertl, Nicholas Justin
(86) International application number: PCT/IB2002/005523
(87) International publication number: WO 2003/056799

(56) References cited:
- US-A- 4 932 050
- US-A- 5 742 905

## Description

### Field of the Invention

The present invention relates to presence detection systems, and in particular to providing a presence detection mechanism capable of providing service logic to control behavior of the communication system.

### Background of the Invention

Systems are being developed that are capable of gathering information from presence detection devices indicating whether or not a user is present The resultant presence information for various users is stored in a central database to which services can subscribe. Either periodically or when a status associated with the presence of a user changes, the services will receive the presence information from the central database and react accordingly. The services will incorporate some type of service logic with which to process the presence information and control behavior of an associated communication system accordingly.

In such systems, the service logic is centrally located in association with the application supporting the services. A user whose presence is being monitored typically has limited control over the service logic, and must effect provisioning procedures to configure the services to provide the desired functionality. In many Instances, it is either awkward or undesirable to configure the services to implement service logic. Further, services supporting a large number of users are often overtaxed while attempting to manage each user, and ultimately must limit the flexibility and capabilities afforded each user.

Accordingly, there is a need for a mechanism at local presence detection systems that is capable of providing service logic configured to control communication behavior in a dynamic fashion.
US-A-5742905 discloses an intemetwork for personal communications. A PCI server monitors messaging activity for registered users. The PCI server also provides a "CallCommand" service for controlling voice calls.
US-A-4932050 discloses a proximity detection system. The system communicates status information, in the form of the presence or absence of a person, to a switch.

### Summary of the Invention

According to an aspect of the invention, there is provided a method comprising: receiving state information bearing on presence of a user, wherein the receiving occurs at at least one presence detection system; creating service logic based on the state information, wherein the service logic is created at the at least one presence detection system and is configured to instruct an associated presence service to control communications associated with the user based on the presence of the user; and providing the service logic from the at least one presence detection system to the presence service.

According to another aspect of the invention, there is provided a presence detection system comprising: an interface adapted to facilitate communications with a communication service; and a control system associated with the interface and adapted to: receive state information bearing on presence of a user; create service logic based on the state information, the service logic configured to instruct an associated presence service to control communications associated with the user based on the presence of the user; and provide the service logic from the presence detection system to the presence service to distribute generation of the service logic.

The present invention provides a mechanism to obtain state information bearing on the presence of a user and create service logic configured to instruct an associated presence service to control communications associated with the user based on presence. The state information is derived from any type of presence detection system capable of determining the physical presence, status, or availability of the user or a device associated with the user. The state information is received and the service logic is created at the presence detection system. Once created, the service logic is delivered to the presence service to control communications in a specific manner. The present invention distributes the service logic based on state information to presence detection systems, which are directly associated with the user rather than service logic being centralized at the presence service.

The state information can be recovered from various types of devices integrated with or associated with the presence detection system. For example, a presence function may be provided on a device to indirectly or directly monitor user activity. For example, a personal computer may be configured to detect user activity based on monitoring keyboard, mouse, or other input device activity. Alternatively, the activation of a screen saver may be detected to indicate that the user is not present at the personal computer, and vice versa. Motion sensors and video cameras may be used to detect the physical presence of the user. Physical presence may also be detected from state information provided by security systems detecting the entry and exit of users with respect to various areas or locations.

In one embodiment, the service logic is configured to control registrations for communication devices associated with the user so that incoming calls directed to the user are directed to different communication devices based on the user's presence. Those skilled in the art will appreciate the scope of the present invention and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the invention, and together with the description serve to explain the principles of the invention.

FIGURE 1 illustrates a communication environment facilitating the dynamic presence management according to one embodiment of the present invention.

FIGURE 2 is a communication flow diagram providing a first exemplary presence detection situation.

FIGURE 3 is a communication flow diagram providing a second exemplary presence detection situation.

FIGURE 4 is a block representation of a presence detection system according to one embodiment of the present invention.

FIGURE 5 is a block representation of a presence server according to one embodiment of the present invention.

### Detailed Description of the Preferred Embodiments

The embodiments set forth below represent the necessary information to enable those skilled in the art to practice the invention and illustrate the best mode of practicing the invention. Upon reading the following description in light of the accompanying drawing figures, those skilled in the art will understand the concepts of the invention and will recognize applications of these concepts not particularly addressed herein. It should be understood that these concepts and applications fall within the scope of the disclosure and the accompanying claims.

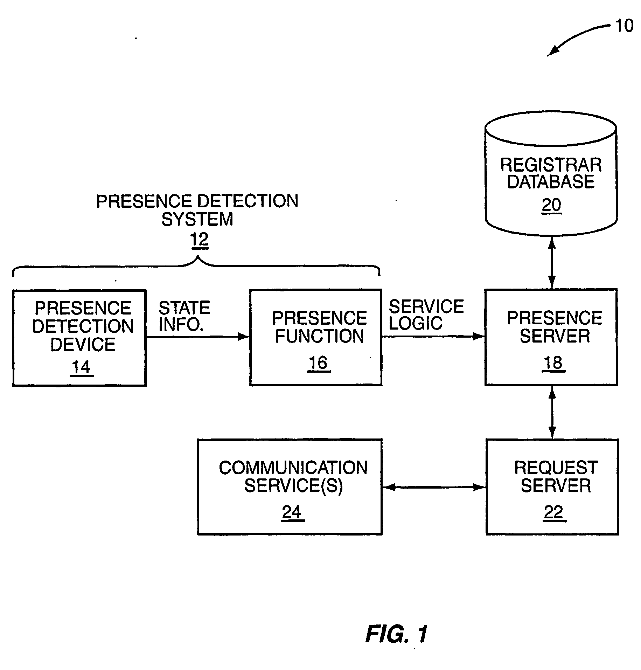

The present invention provides a framework to manage presence information for one or more users in a dynamic fashion. With reference to Figure 1, a presence detection environment 10 is illustrated. A presence detection system 12 is provided and includes a presence detection device 14 capable of detecting the presence of a user and generating state information based on the presence of the user. The presence of the user may be related to the physical presence of the user, the status of a device associated with the user, or the availability of the user or device associated with the user. The state information is processed by a presence function 16 of the presence detection system 12 to create service logic configured to control communications associated with the user in a specific manner. Typically, the service logic will provide instructions for another device within the environment 10 to behave in a new or different manner.

In one embodiment, the service logic is delivered from the presence function 16 to a presence server 18. The presence server 18 keeps a list of users, their presence information, and any associated service logic in an associated registrar database 20. The service logic may be processed to provide information for other services in association with the user, or stored such that these services can access service logic and respond accordingly. Typically, a request server 22 will retrieve information from the presence server 18 through an application programming interface (API) or message. The request server 22 can then distribute the information to appropriate communication services 24.

The presence detection device 14 of the presence detection system 12 is used to detect the end user's presence, and can take any number of forms and process any type of indicia that can provide information bearing on the presence of the user. For example, the presence detection device 14 may include a motion detector, a video camera, or other sensing device capable of detecting the physical presence of a user. Alternatively, the presence detection device 14 may be any type of device used by the user and capable of providing information pertaining to user activity associated with the device or information pertaining to whether the device is active and available for the user to use.

For example, the presence detection device 14 may be a computer having the necessary software to monitor the status of a screen saver, wherein when the screen saver is inactive, the user is deemed present, and when the screen saver is active, the user is deemed not present. The activity of the user in association with the computer could also be determined by monitoring keyboard, mouse, or other input device use, which would be indicative of the presence of the user. Further, user monitoring systems, such as entry and exit monitoring systems, can be used to detect user presence. For example, the presence detection device 14 may be part of a building security system that requires a user to have an electronic key and provide a password for entry. When a user is inside the building or within an area associated with the monitoring system, the user is deemed present, and vice versa.

The presence detection device 14 may also take the form of a telephone or mobile terminal, such as a cellular telephone, wherein information bearing on use or activation is indicative of user presence. In a plain old telephone system (POTS), entities providing call signaling in the advanced intelligent network (AIN) can be used to detect presence. For example, when a telephone goes off hook, a supporting switch for the telephone may send an AIN TCAP message to a signal control point (SCP) indicating that the telephone went off hook. The SCP may then send a message to the presence server 18 indicating that the user is presently at the telephone.

As indicated, the information bearing on presence as detected by the presence detection device 14 is generally referred to as state information, which is provided to the presence function 16 for processing. The presence function 16 will process the state information and create service logic, which is configured to control communication behavior, for delivery to the presence server 18. The service logic may include or be associated with the actual state information to allow the presence server 18 to not only have service logic, but also the state and related information.

Preferably, the presence server 18 will maintain a list of users and keep their state information and service logic up-to-date in the registrar database 20. The presence server 18 will provide updates to the request server 22 based on a standing request, periodically, or when the state information associated with the user changes from one state to another, as desired.

The request server 22 will provide information bearing on presence, or the service logic, to the communication services 24 as necessary.
Typically, the service logic is used to determine how to control communication services 24 based on the presence information. The communication services 24 may receive the service logic directly, or may receive information derived based on processing of the service logic, via the request server 22. The service logic may be passive or active. Passive service logic may be configured to effect communications only when a communication service 24 is invoked. Active service logic may be configured to trigger an event immediately upon receipt by the presence server 18 or upon receiving a request from one or more communication services 24.

In a preferred embodiment, communications between the presence detection system 12, the presence server 18, and the request server 22 are facilitated over a packet-switched communication network (not shown). Further, in one embodiment of the present invention, communications between these devices and devices supporting the communication services 24 are facilitated on a packet-switched network and use the session initiation protocol (SIP). The specification for SIP is provided in the Internet Engineering Task Force's RFC 2543: Session Initiation Protocol Internet Draft, which is incorporated herein by reference in its entirety.

In general, a SIP proxy, such as may be provided by the request server 22, may facilitate media sessions between any number of endpoints. These endpoints may support any one or combination of data, audio, and voice media sessions, depending on the configuration of the respective endpoints. Although not inclusive, endpoints may take the form of a personal computer (PC), telephone, personal digital assistant (PDA), and the like. Further, the presence server 18 will communicate with the presence function 16 and the request server 22 using SIP.

A SIP endpoint is generally capable of running an application, which is referred to as a user agent (UA), capable of facilitating media sessions using SIP. User agents register their ability to establish sessions with a SIP proxy by sending "REGISTER" messages to the SIP proxy. The REGISTER message informs the SIP proxy of the SIP universal resource locator (URL) that identifies the user agent to the SIP network. The REGISTER message also contains information about how to reach specific user agents over the SIP network, by providing the Internet Protocol (IP) address and port that the user agent will use for SIP sessions.

When a user agent wants to establish a session with another user agent, the user agent initiating the session will send an INVITE message to the SIP proxy and specify the targeted user agent in the TO header of the INVITE message. Identification of the user agent takes the form of a SIP URL. In its simplest form, the URL is represented by a number or "<username>@<domain>," such as "janedoe@norteinetworks.com." The SIP proxy will use the SIP URL in the TO header of the message to determine if the targeted user agent is registered with the SIP proxy. Generally, the user name is unique within the name space of the specified domain.

If the targeted user agent has registered with the SIP proxy, the SIP proxy will forward the INVITE message directly to the targeted user agent. The targeted user agent will respond with a 200 OK message, and a session between the respective user agents will be established as per the message exchange required in the SIP specification. Media capabilities are passed between the two user agents of the respective endpoints as parameters embedded within the session setup messages, such as the INVITE, 200 OK, and acknowledgement (ACK) messages. The media capabilities are typically described using the Session Description Protocol (SDP). Once respective endpoints are in an active session with each other and have determined each other's capabilities, the specified media content may be exchanged during an appropriate media session.

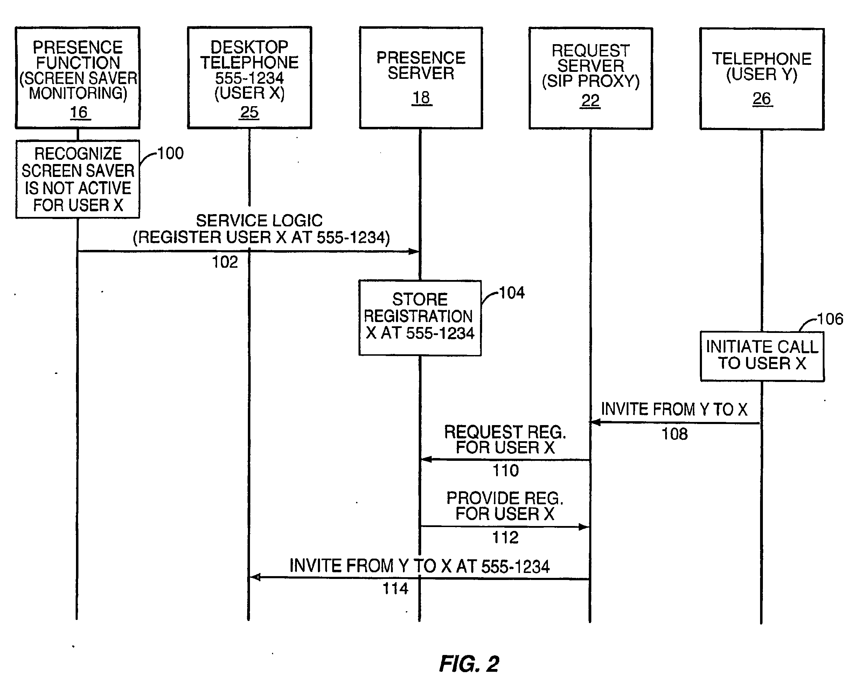

With reference to Figure 2, a first example of how the present invention may operate is illustrated. Assume that User X is associated with a PC capable of detecting when a screen saver is active or inactive, wherein an inactive screen saver is associated with the user being present and an active screen saver is associated with the user not being present, in an office having a desktop telephone 25. Further assume that the desktop telephone 25 is associated with a directory number 555-1234.

Initially, User X is working on his PC and the screen saver is not active. The PC and the screen monitoring function represent the presence detection device 14, and will provide state information indicating that the screen saver is not active to the presence function 16, which may also run on User X's PC. Accordingly, the presence function 16 will recognize that the screen saver is not active (step 100) and create service logic based on the fact that User X is present at the PC. Assume that the service logic is created to register the desktop telephone 25 with User X when the screen saver is active. Thus, the presence function 16 sends service logic in the form of a SIP REGISTER message configured to register User X in association with telephone number 555-1234 to the presence server 18 (step 102). The SIP REGISTER message will typically identify User X in the FROM and TO headers, and list the directory number in the CONTACT field. Upon receipt of the service logic, the presence server 18 will register User X in association with the directory number 555-1234 by storing the information in the registrar database 20 as shown in Figure 1 (step 104). At this point, incoming calls intended for User X will be directed to the desktop telephone 25, which corresponds to the directory number 555-1234.

Thus, when a SIP-based IP telephone 26 associated with User Y initiates a call to User X (step 106), an INVITE message is sent to the SIP proxy provided by the request server 22 (step 108). The INVITE message will include User Y in the FROM header and User X in the TO header. The request server 22 will request the registration information from the presence server 18 (step 110), which will respond by providing the associated registration information for User X (step 112). The registration information will identify the directory number 555-1234. Accordingly, the request server 22 will send a corresponding INVITE message to the desktop telephone 25 to initiate a voice media session between the desktop telephone 25 of User X and the telephone 26 of User Y (step 114). In this example, the presence function 16 of the presence detection system 12 created service logic triggering the registration of the desktop telephone 25 in association with User X while User X was using his PC.

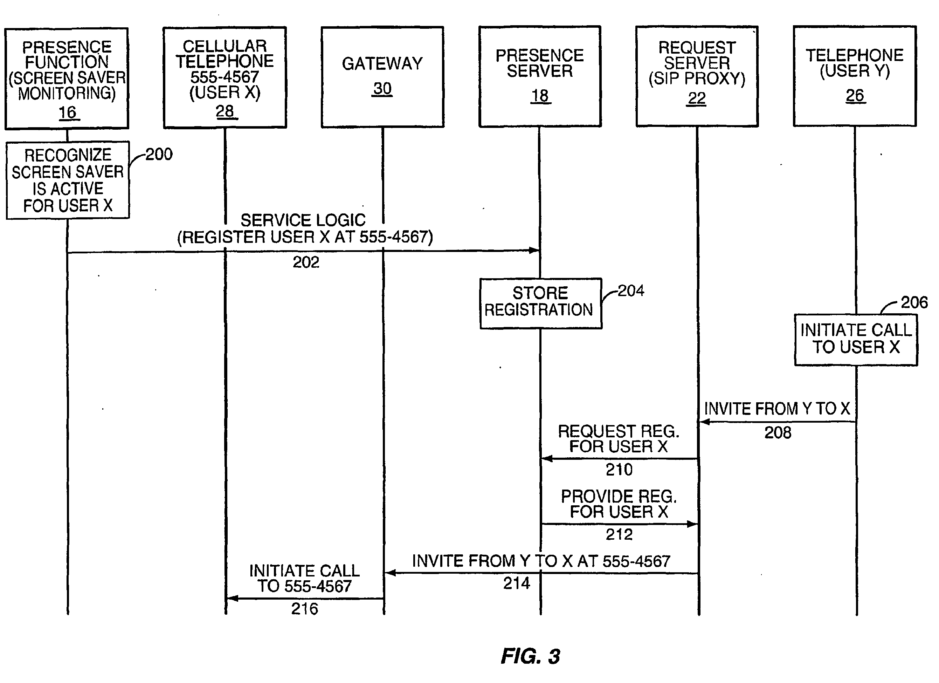

Turning now to Figure 3, assume that User X wishes to have incoming calls directed to a cellular telephone 28, which is associated with a directory number 555-4567, when User X is not present at the PC as indicated by activation of the screen saver on the PC. Accordingly, when the presence function 16 determines that the screen saver is active (step 200), service logic is generated in a manner that will register User X with the directory number 555-4567 corresponding to the cellular telephone 28. The service logic is then sent to the presence server 18 (step 202), which stores the registration information (step 204).

When User Y initiates a call to User X (step 206), User Y's telephone 26 will send an INVITE message to the request server 22 (step 208), which acts as a SIP proxy for telephone 26. The request server 22 will request registration information for User X from the presence server 18 (step 210), which will respond with registration information indicating that User X is associated with the directory number 555-4567 (step 212). Since the cellular telephone 28 is a mobile terminal supported by a circuit-switched network, a gateway 30 is provided to connect the packet network with the circuit network supporting cellular telephone 28. In this example, the gateway 30 provides a SIP interface to the request server 22 and a circuit-switched interface to the switching systems and networks necessary to establish a call with the cellular telephone 28. Accordingly, the request server 22 will send an INVITE message to the gateway 30, which represents the cellular telephone 28 on the packet network (step 214). The gateway 30 will process the INVITE message and instigate the necessary call signaling to initiate a call to 555-4567, which corresponds to the cellular telephone 28 (step 216). As illustrated, the presence function 16 triggered a new registration for User X when the screen saver is activated. Activity of the screen saver indicates that User X is not present, and thus, calls to User X will be directed to cellular telephone 28.

Although the above examples relate to providing service logic capable of registering contact information for a user based on presence, the service logic may be configured to trigger any action at the presence server 18 by the communication services 24 in a direct or indirect manner. For example, the service logic may include information triggering the presence server 18 or request server 22 to alert another user of a state change via an identified device, initiate a communication session, request information, terminate other associated or unassociated media sessions, and the like. Those skilled in the art will recognize the flexibility in allowing a user to configure a presence function 16 to create service logic capable of controlling behavior of other services or systems based on presence in a dynamic fashion. Accordingly, users can dynamically manage virtually any type of function or action based on their presence.

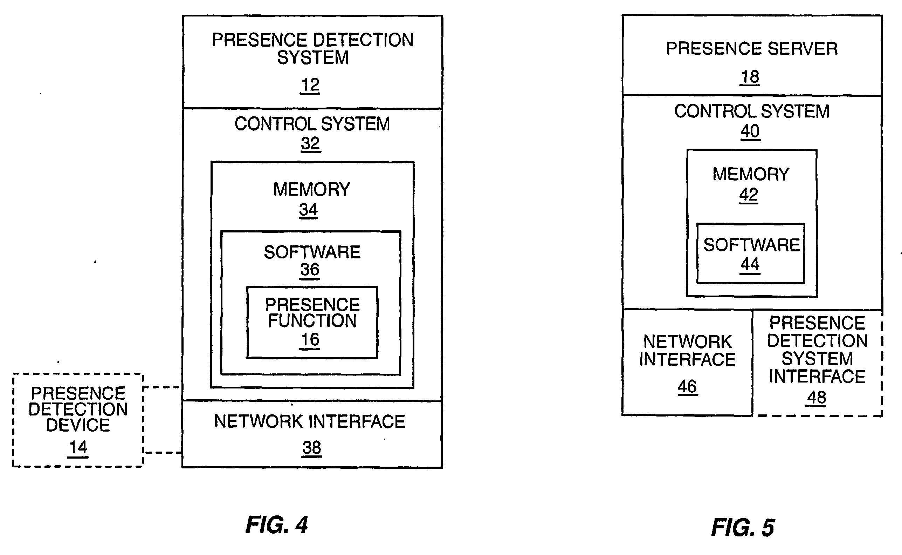

With reference to Figure 4, a block representation of a presence detection system 12 is provided to include a control system 32 having sufficient memory 34 with the necessary software 36 to facilitate operation as described above. The software 36 will include the presence function 16 to receive or monitor state information, create the necessary service logic, and send the service logic to the presence server 18. The control system 32 is also associated with a network interface 38 to facilitate communications with the presence server 18. The presence detection device 14 may be integrated with the control system 32 or provided as a stand-alone unit or system, wherein the software 36 is capable of facilitating interaction with the presence detection device 14 and recovering state information as states change or on a periodic basis. The presence detection device 14 may be a single device, or may be all or part of a different system, as noted above.

As illustrated in Figure 5, the presence server 18 will have a control system 40 with sufficient memory 42 to provide the necessary software 44 for operation. The control system 40 is associated with a network interface 46 to facilitate communications with the request server 22 and the presence detection system 12. The presence server 18 may also include a presence detection system interface 48 in case communications with the presence detection system 12 take place over a proprietary network or communication medium.

Those skilled in the art will recognize improvements and modifications to the preferred embodiments of the present invention.

## Claims

1. A method comprising:
receiving state information bearing on presence of a user, wherein the receiving occurs at at least one presence detection system (12);
creating service logic based on the state information, **characterized in that** the service logic is created at the at least one presence detection system (12) and is configured to instruct an associated presence service (18) to control communications associated with the user based on the presence of the user; and
providing the service logic from the at least one presence detection system (12) to the presence service (18).

2. The method of claim 1 wherein the presence of the user relates to at least one of the group consisting of physical presence, availability, and status of the user or a device associated with the user.

3. The method of claim 1 wherein the service logic is configured to instruct the presence service (18) to register a first communication device associated with the user to receive communications when the state information is a first state.

4. The method of claim 3 wherein the service logic is configured to instruct the presence service (18) to register a second communication device associated with the user to receive communications when the state information is a second state.

5. The method of claim 1 wherein the state information is provided to the presence service with the service logic.

6. The method of claim 1 wherein the state information indicates whether a screen saver is active or inactive.

7. The method of claim 1 wherein the state information indicates whether the user is using a device.

8. The method of claim 1 wherein the state information indicates whether a device associated with the user is activated.

9. The method of claim 1 wherein the state information indicates whether the user is physically present in an area.

10. The method of claim 1 wherein the state information indicates whether the user is physically proximate to a device.

11. The method of claim 1 wherein the service logic is active and therefore configured to cause the presence service (18) to immediately react in a manner to control communications associated with the user.

12. The method of claim 1 wherein the service logic is passive and therefore configured to cause the presence service (18) to react in a manner to control communications associated with the user upon the presence service (18) reacting to a request bearing on communications with the user.

13. The method of claim 1 further comprising executing the service logic at the presence service (18) to control communications associated with the user.

14. The method of claim 13 wherein the executing step further comprises controlling the communications associated with the user based on the service logic in response to an application attempting to communicate with the user.

15. A system comprising:
an interface (38) adapted to facilitate communications with a communication service; and **characterized in that** it comprises
a control system (32) associated with the interface and adapted to:
receive state information bearing on presence of a user;
create service logic based on the state information, the service logic configured to instruct an associated presence service to control communications associated with the user based on the presence of the user; and
provide the service logic from the presence detection system (12) to the presence service (18) to distribute generation of the service logic.

16. The system of claim 15 wherein the presence of the user relates to at least one of the group consisting of physical presence, availability, and status of the user or a device associated with the user.

17. The system of claim 15 wherein the service logic is configured to instruct the presence service (18) to register a first communication device associated with the user to receive communications when the state information is a first state.

18. The system of claim 17 wherein the service logic is configured to instruct the presence service (18) to register a second communication device associated with the user to receive communications when the state information is a second state.

19. The system of claim 15 wherein the state information is provided to the presence service (18) with the service logic.

20. The system of claim 15 wherein the state information indicates whether a screen saver is active or inactive.

21. The system of claim 15 wherein the state information indicates whether the user is using a device.

22. The system of claim 15 wherein the state information indicates whether a device associated with the user is activated.

23. The system of claim 15 wherein the state information indicates whether the user is physically present in an area.

24. The system of claim 15 wherein the state information indicates whether the user is physically proximate to a device.

25. The system of claim 15 wherein the service logic is active and therefore configured to cause the presence service (18) to immediately react in a manner to control communications associated with the user.

26. The system of claim 15 wherein the service logic is passive and therefore configured to cause the presence service (18) to react in a manner to control communications associated with the user upon the presence service (18) reacting to a request bearing on communications with the user.

27. A computer program comprising computer program code means adapted to perform all of the steps of any one of claims 1 to 14 when said program is run on a computer.

28. A computer program as claimed in claim 27 embodied on a computer readable medium.

## Patentansprüche

1. Ein Verfahren, das folgende Schritte umfasst:
Empfangen von Statusinformation bezüglich der Anwesenheit eines Benutzers, wobei der Empfang an zumindest einem Anwesenheits-Detektionssystem (12) erfolgt;
Erzeugen einer Dienstelogik, die auf der Statussinformation beruht;
**dadurch gekennzeichnet, dass**
die Dienstelogik an dem zumindest einen Anwesenheits-Detektionssystem (12) erzeugt wird und so konfiguriert wird, dass sie Befehle an einen zugehörigen Anwesenheits-Dienst (18) liefert, um dem Benutzer zugeordnete Kommunikationen auf der Grundlage der Anwesenheit des Benutzers zu steuern; und
die Dienstelogik von dem zumindest einen Anwesenheits-Detektionssystem (12) an den Anwesenheits-Dienst (18) geliefert wird.

2. Verfahren nach Anspruch 1, bei dem die Anwesenheit des Benutzers sich auf zumindest eines der Gruppe bezieht, die aus der körperlichen Anwesenheit, der Verfügbarkeit und dem Status des Benutzers oder eines dem Benutzer zugeordneten Gerätes besteht.

3. Verfahren nach Anspruch 1, bei dem die Dienstelogik so konfiguriert ist, dass sie den Anwesenheits-Dienst (18) anweist, ein erstes dem Benutzer zugeordnetes Kommunikationsgerät zum Empfang von Kommunikationen zu registrieren, wenn sich die Statusinformation in einem ersten Zustand befindet.

4. Verfahren nach Anspruch 3, bei dem die Dienstelogik so konfiguriert ist, dass sie dem Anwesenheits-Dienst (18) anweist, ein zweites dem Benutzer zugeordnetes Kommunikationsgerät zum Empfang von Kommunikationen zu Registrieren, wenn sich die Statusinformation in einem zweiten Zustand befindet.

5. Verfahren nach Anspruch 1, bei dem die Statusinformation an den Anwesenheits-Dienst mit der Dienstelogik geliefert wird.

6. Verfahren nach Anspruch 1, bei dem die Statusinformation anzeigt, ob ein Bildschirmschoner aktiv oder inaktiv ist.

7. Verfahren nach Anspruch 1, bei dem die Statusinformation anzeigt, ob der Benutzer ein Gerät nutzt.

8. Verfahren nach Anspruch 1, bei dem die Statusinformation anzeigt, ob ein dem Benutzer zugeordnetes Gerät aktiviert ist.

9. Verfahren nach Anspruch 1, bei dem die Statusinformation anzeigt, ob der Benutzer körperlich in einem Bereich anwesend ist.

10. Verfahren nach Anspruch 1, bei dem die Statusinformation anzeigt, ob sich der Benutzer körperlich in der Nähe eines Gerätes befindet.

11. Verfahren nach Anspruch 1, bei dem die Dienstelogik aktiv ist und daher so konfiguriert ist, das sie bewirkt, dass der Anwesenheits-Dienst (18) unmittelbar in einer Weise reagiert, um die dem Benutzer zugeordneten Kommunikationen zu steuern.

12. Verfahren nach Anspruch 1, bei dem die Dienstelogik passiv ist und daher so konfiguriert ist, das sie bewirkt, dass der Anwesenheits-Dienst (18) in einer Weise reagiert, um die dem Benutzer zugeordneten Kommunikationen zu steuern, wenn der Anwesenheits-Dienst (18) auf eine Anforderung reagiert, die sich auf Kommunikationen mit dem Benutzer bezieht.

13. Verfahren nach Anspruch 1, das weiterhin die Ausführung der Dienstelogik an dem Anwesenheits-Dienst (18) zur Steuerung von dem Benutzer zugeordneten Kommunikationen umfasst.

14. Verfahren nach Anspruch 13, bei dem der Ausführungs-Schritt weiterhin die Steuerung der dem Benutzer zugeordneten Kommunikationen auf der Grundlage der Dienstelogik als Antwort darauf umfasst, dass eine Anwendung versucht, mit dem Benutzer zu kommunizieren.

15. System, das folgendes umfasst:
eine Schnittstelle (38), die zur Erleichterung von Kommunikationen mit einem Kommunikationsdienst ausgebildet ist; und
**dadurch gekennzeichnet, dass** es folgendes umfasst:
ein Steuersystem (32), das der Schnittstelle zugeordnet und zum Empfang von Statusinformation ausgebildet ist, die sich auf die Anwesenheit eines Benutzers bezieht,
die Erzeugung einer Dienstelogik auf der Grundlage der Statusinformation, wobei die Dienstelogik so konfiguriert ist, dass sie einen zugehörigen Anwesenheits-Dienst anweist, dem Benutzer zugeordnete Kommunikationen auf der Grundlage der Anwesenheit des Benutzers zu steuern; und
Bereitstellung der Dienstelogik von dem Anwesenheits-Detektionssystem (12) an den Anwesenheits-Dienst (18), um die Erzeugung der Dienstelogik zu verteilen.

16. System nach Anspruch 15, bei dem die Anwesenheit des Benutzers sich auf zumindest eines der Gruppe bezieht, die aus der körperlichen Anwesenheit, der Verfügbarkeit und des Status und des Benutzers oder eines dem Benutzer zugeordneten Gerätes besteht.

17. System nach Anspruch 15, bei dem die Dienstelogik so konfiguriert ist, dass sie den Anwesenheits-Dienst (18) anweist, ein erstes dem Benutzer zugeordnetes Kommunikations-Gerät zum Empfang von Kommunikationen zu registrieren, wenn sich die Statusinformation in einem ersten Zustand befindet.

18. System nach Anspruch 17, bei dem die Dienstelogik so konfiguriert ist, dass sie den Anwesenheits-Dienst (18) anweist, ein zweites dem Benutzer zugeordnetes Kommunikations-Gerät zum Empfang von Kommunikationen zu registrieren, wenn sich die Statusinformation in einem zweiten Zustand befindet.

19. System nach Anspruch 15, bei dem die Statusinformation dem Anwesenheits-Dienst (18) mit der Dienstelogik geliefert wird.

20. System nach Anspruch 15, bei dem die Statusinformation anzeigt, ob ein Bildschirmschoner aktiv oder inaktiv ist.

21. System nach Anspruch 15, bei dem die Statusinformation anzeigt, ob der Benutzer ein Gerät benutzt.

22. System nach Anspruch 15, bei dem die Statusinformation anzeigt, ob ein dem Benutzer zugeordnetes Gerät aktiviert ist.

23. System nach Anspruch 15, bei dem die Statusinformation anzeigt, ob der Benutzer körperlich in einem Bereich anwesend ist.

24. System nach Anspruch 15, bei dem die Statusinformation anzeigt, ob sich der Benutzer körperlich in der Nähe eines Gerätes befindet.

25. System nach Anspruch 15, bei dem die Dienstelogik aktiv ist und daher so konfiguriert ist, dass sie bewirkt, dass der Anwesenheits-Dienst (18) unmittelbar in einer Weise zur Steuerung der dem Benutzer zugeordneten Kommunikationen reagiert.

26. System nach Anspruch 15, bei dem die Dienstelogik passiv ist und daher so konfiguriert ist, dass sie bewirkt, dass der Anwesenheits-Dienst (18) in einer Weise zur Steuerung der dem Benutzer zugeordneten Kommunikationen bei einer Reaktion des Anwesenheits-Dienstes (18) auf eine Anforderung reagiert, die sich auf Kommunikationen mit dem Benutzer bezieht.

27. Computerprogramm, das Computerprogramm-Codeeinrichtungen umfasst, die zur Ausführung aller der Schritte nach einem der Ansprüche 1 bis 14 ausgebildet sind, wenn das Programm auf einem Computer abläuft.

28. Computerprogramm, nach Anspruch 27, das auf einem computerlesbaren Medium verwirklicht ist.

## Revendications

1. Un procédé comprenant les étapes consistant à :
recevoir une information d'état portant sur la présence d'un utilisateur, la réception ayant lieu à au moins un système de détection de présence (12);
créer une logique de service sur la base de l'information d'état, **caractérisé en ce que** la logique de service est créée à l'au moins un système de détection de présence (12) et est configurée pour ordonner à un service de présence (18) associé de commander des communications associées à l'utilisateur, sur la base de la présence de l'utilisateur; et
fournir la logique de service au service de présence (18) à partir de l'au moins un système de détection de présence (12).

2. Le procédé selon la revendication 1, dans lequel la présence de l'utilisateur concerne au moins une caractéristique du groupe comprenant la présence physique, la disponibilité et l'état de l'utilisateur ou d'un dispositif associé à l'utilisateur.

3. Le procédé selon la revendication 1, dans lequel la logique de service est configurée pour ordonner au service de présence (18) d'enregistrer un premier dispositif de communication associé à l'utilisateur pour recevoir des communications lorsque l'information d'état est dans un premier état.

4. Le procédé selon la revendication 3, dans lequel la logique de service est configurée pour ordonner au service de présence (18) d'enregistrer un second dispositif de communication associé à l'utilisateur pour recevoir des communications lorsque l'information d'état est dans un second état.

5. Le procédé selon la revendication 1, dans lequel l'information d'état est fournie au service de présence avec la logique de service.

6. Le procédé selon la revendication 1, dans lequel l'information d'état indique si un économiseur d'écran est actif ou inactif.

7. Le procédé selon la revendication 1, dans lequel l'information d'état indique si l'utilisateur est en train d'utiliser un dispositif.

8. Le procédé selon la revendication 1, dans lequel l'information d'état indique si un dispositif associé à l'utilisateur est activé.

9. Le procédé selon la revendication 1, dans lequel l'information d'état indique si l'utilisateur est physiquement présent dans une zone.

10. Le procédé selon la revendication 1, dans lequel l'information d'état indique si l'utilisateur est physiquement proche d'un dispositif.

11. Le procédé selon la revendication 1, dans lequel la logique de service est active et donc configurée pour faire en sorte que le service de présence (18) réagisse immédiatement de manière à commander des communications associées à l'utilisateur.

12. Le procédé selon la revendication 1, dans lequel la logique de service est passive, et donc configurée pour faire en sorte que le service de présence (18) réagisse de manière à commander des communications associées à l'utilisateur au moment auquel le service de présence (18) réagit à une demande portant sur des communications avec l'utilisateur.

13. Le procédé selon la revendication 1, comprenant en outre l'exécution de la logique de service au service de présence (18) pour commander des communications associées à l'utilisateur.

14. Le procédé selon la revendication 13, dans lequel l'étape d'exécution comprend en outre la commande des communications associées à l'utilisateur sur la base de la logique de service, en réponse au fait qu'une application tente de communiquer avec l'utilisateur.

15. Un système comprenant :
une interface (38) adaptée pour faciliter des communications avec un service de communication; et **caractérisé en ce qu'**il comprend :
un système de commande (32) associé à l'interface et adapté pour :
recevoir une information d'état portant sur la présence d'un utilisateur;
créer une logique de service sur la base de l'information d'état, la logique de service étant configurée pour ordonner à un service de présence associé de commander des communications associées à l'utilisateur, sur la base de la présence de l'utilisateur; et
fournir la logique de service au service de présence (18), à partir du système de détection de présence (12), pour distribuer la génération de la logique de service.

16. Le système selon la revendication 15, dans lequel la présence d'un utilisateur porte sur au moins une caractéristique du groupe comprenant la présence physique, la disponibilité et l'état de l'utilisateur ou d'un dispositif associé à l'utilisateur.

17. Le système selon la revendication 15, dans lequel la logique de service est configurée pour ordonner au service de présence (18) d'enregistrer un premier dispositif de communication associé à l'utilisateur pour recevoir des communications lorsque l'information d'état est dans un premier état.

18. Le système selon la revendication 17, dans lequel la logique de service est configurée pour ordonner au service de présence (18) d'enregistrer un second dispositif de communication associé à l'utilisateur pour recevoir des communications lorsque l'information d'état est dans un second état.

19. Le système selon la revendication 15, dans lequel l'information d'état est fournie au service de présence (18) avec la logique de service.

20. Le système selon la revendication 15, dans lequel l'information d'état indique si un économiseur d'écran est actif ou inactif.

21. Le système selon la revendication 15, dans lequel l'information d'état indique si l'utilisateur est en train d'utiliser un dispositif.

22. Le système selon la revendication 15, dans lequel l'information d'état indique si un dispositif associé à l'utilisateur est activé.

23. Le système selon la revendication 15, dans lequel l'information d'état indique si l'utilisateur est physiquement présent dans une zone.

24. Le système selon la revendication 15, dans lequel l'information d'état indique si l'utilisateur est physiquement proche d'un dispositif.

25. Le système selon la revendication 15, dans lequel la logique de service est active et donc configurée pour faire en sorte que le service de présence (18) réagisse immédiatement de manière à commander des communications associées à l'utilisateur.

26. Le système selon la revendication 15, dans lequel la logique de service est passive et donc configurée pour faire en sorte que le service de présence (18) réagisse de manière à commander des communications associées à l'utilisateur au moment auquel le service de présence (18) réagit à une demande portant sur des communications avec l'utilisateur.

27. Un programme d'ordinateur comprenant une structure de code de programme d'ordinateur adaptée pour accomplir toutes les étapes de l'une quelconque des revendications 1 à 14 lorsque ce programme est exécuté sur un ordinateur.

28. Un programme d'ordinateur selon la revendication 27, incorporé sur un support lisible par ordinateur.
